# EUROPEAN PATENT APPLICATION

(11) **EP 4 631 664 A1**
(43) Date of publication of application: **15.10.2025**
(21) Application number: 23907899.1
(22) Date of filing: 22.12.2023
(51) Int. Cl.: B23K 20/10, B23K 20/22, H01M 50/531

(54) **ULTRASONIC WELDING DEVICE AND WELDED STRUCTURE**

(30) Priority: 23.12.2022 KR 20220183127
(71) Applicant: LG Energy Solution, Ltd., Seoul 07335 (KR)
(72) Inventor: LEE, Chang-Je, Daejeon 34122 (KR); SHIN, Seung-Min, Daejeon 34122 (KR); KIM, Min-Woo, Daejeon 34122 (KR)
(74) Representative: Goddar, Heinz J.
(86) International application number: PCT/KR2023/021510
(87) International publication number: WO 2024/136616

(57) **Abstract**

An ultrasonic welding device according to an embodiment of the present disclosure may include a horn configured to press a first member to ultrasonically weld the first member and a second member, wherein the horn includes a knurled portion having a plurality of protrusions configured to protrude toward the first member to produce an uneven shape in the first member, and wherein the shape of a protrusion located in an outermost area of the knurled portion is different from the shape of a protrusion located in an inner area of the knurled portion.

## Description

### TECHNICAL FIELD

The present disclosure relates to an ultrasonic welding device and a welded structure using the same.

The present application claims priority to Korean Patent Application No. 10-2022-0183127 filed on December 23, 2022 in the Republic of Korea, the disclosures of which are incorporated herein by reference.

### BACKGROUND ART

Demand for secondary batteries is increasing as an energy source for electronic devices such as mobile phones, laptop computers, and wearable devices or electric vehicles. Secondary batteries are classified into nickel-cadmium secondary batteries, nickel-hydrogen secondary batteries, and lithium secondary batteries depending on the type of electrode, and active research and development on lithium secondary batteries, which have the advantages of high operating voltage and high energy density per unit weight, is underway.

Depending on the shape of a battery case, the lithium secondary batteries are classified into prismatic secondary batteries and cylindrical secondary batteries, in which an electrode assembly is stored in a metal can, and pouch-type secondary batteries in which the electrode assembly is stored in a pouch case made of aluminum laminate sheets.

Meanwhile, when a cylindrical battery is inserted, a terminal provided on the closed portion of the battery can may penetrate through the closed portion and come into contact with the collector plate disposed inside the battery can. Therefore, the contact portion between the collector plate and the terminal may be welded by performing ultrasonic welding while a welding horn is in contact with the collector plate inside the battery can.

As described above, the collector plate and the terminal may be connected, for example, by ultrasonic welding, and the ultrasonic welding device uses an anvil on which the terminal is seated and a horn that presses the collector plate.

Existing horns have a structure with a plurality of protrusions to increase friction and pressure. However, according to this structure, the pressing force on the outermost point of the welding area may produce burrs and/or foreign substances on the upper member, and if it is used without separate treatment, the burrs and/or foreign substances remaining inside the battery may affect performance.

### DISCLOSURE

### Technical Problem

The present disclosure has been designed to solve the problems of the related art, and therefore the present disclosure is directed to providing an ultrasonic welding device configured to prevent the production of burrs and/or foreign substances on the object to be welded when performing ultrasonic welding.

In another aspect, the present disclosure is to provide a structure including a plurality of stacked objects welded without producing burrs and/or foreign substances.

In another aspect, the present disclosure is also to provide a structure including a plurality of stacked objects welded having burrs and/or foreign substances equal to or less than a specific size or a specific number.

In another aspect, the present disclosure is also intended to strengthen internal performance of a battery and ensure stable battery performance by preventing the production of burrs and/or foreign substances.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided an ultrasonic welding device including a horn configured to press a first member to ultrasonically weld the first member and a second member, wherein the horn includes a knurled portion having a plurality of protrusions configured to protrude toward the first member to produce an uneven shape on the first member, and wherein the shape of a protrusion located in an outermost area of the knurled portion is different from the shape of a protrusion located in an inner area of the knurled portion.

Preferably, the protrusion may be configured such that the cross-sectional area thereof is gradually reduced toward the first member.

According to an aspect of the present disclosure, a first width of the protrusion at an end point of the protrusion may be less than a second width of the protrusion at a point from which the protrusion starts to protrude.

According to another aspect of the present disclosure, the first width of the protrusion located in the outermost area of the knurled portion may be configured to be greater than the first width of the protrusion located in the inner area of the knurled portion.

Preferably, the first width of the protrusion located in the outermost area of the knurled portion may be configured to be within a range of 1.2 to 1.8 times the first width of the protrusion located in the inner area of the knurled portion.

According to another aspect of the present disclosure, the second width of the protrusion located in the outermost area of the knurled portion may be less than or equal to the second width of the protrusion located in the inner area of the knurled portion.

Preferably, the second width of the protrusion located in the outermost area of the knurled portion may be configured to be within a range of 0.4 to 1.0 times the second width of the protrusion located in the inner area of the knurled portion.

According to another aspect of the present disclosure, a height of the protrusion located in the outermost area of the knurled portion may be less than a height of the protrusion located in the inner area of the knurled portion.

According to another aspect of the present disclosure, the protrusion may be configured to have a trapezoidal shape in its longitudinal cross-section.

According to an embodiment of the present disclosure, there is provided a structure including a plurality of stacked objects to be welded, wherein the plurality of stacked objects may be ultrasonically welded, wherein a plurality of indentations may be formed on the outer surface of the plurality of stacked objects by ultrasonic welding, and wherein a width of an indentation in an outermost area, among the plurality of indentations, may be greater than a width of an indentation in an inner area.

According to another embodiment of the present disclosure, there is provided a structure including a plurality of stacked objects to be welded, wherein the plurality of stacked objects may be ultrasonically welded, wherein a plurality of indentations may be formed on the outer surface of the plurality of stacked objects by ultrasonic welding, and wherein a depth of an indentation in an outermost area, among the plurality of indentations, may be less than a depth of an indentation in an inner area.

Here, the structure including the plurality of stacked objects to be welded may be a cylindrical battery.

Particularly, the plurality of stacked objects to be welded may be terminals and collectors included in the cylindrical battery.

### Advantageous Effects

According to the present disclosure, it is possible to prevent the production of burrs and/or foreign substances on the object to be welded when performing ultrasonic welding.

In another aspect, according to the present disclosure, it is possible to strengthen internal performance of the battery and secure stable battery performance by preventing the production of burrs and/or foreign substances.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a diagram illustrating an ultrasonic welding device and an object to be welded according to an embodiment of the present disclosure.
FIG. 2 is a diagram illustrating the ultrasonic welding process of an ultrasonic welding device according to an embodiment of the present disclosure.
FIG. 3 is a diagram illustrating a horn included in an ultrasonic welding device according to an embodiment of the present disclosure.
FIG. 4 is a diagram illustrating an ultrasonic welding device and a first member according to an embodiment of the present disclosure.
FIG. 5 is a diagram illustrating the structure of a conventional horn.
FIG. 6 is a diagram illustrating the process of ultrasonically welding a first member and a second member using the conventional horn.
FIG. 7 is a diagram illustrating the structure of a horn according to an embodiment of the present disclosure.
FIG. 8 is a diagram illustrating the structure of a horn according to another embodiment of the present disclosure.
FIG. 9 is a diagram illustrating the process of ultrasonically welding a first member and a second member using a horn according to an embodiment of the present disclosure.
FIG. 10 is a graph comparing the total amount of foreign substances resulting from ultrasonic welding using the conventional horn with the total amount of foreign substances resulting from ultrasonic welding using a horn according to an embodiment of the present disclosure.
FIG. 11 is a diagram illustrating an ultrasonic welding system according to an embodiment of the present disclosure.
FIG. 12 is a diagram illustrating the first collector included in an ultrasonic welding system according to an embodiment of the present disclosure.
FIG. 13 is a schematically cross-sectional view taken along line C-C' in FIG. 12.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, to aid understanding of the present disclosure, the accompanying drawings are not drawn to real scales and the dimensions of some elements may be exaggerated.

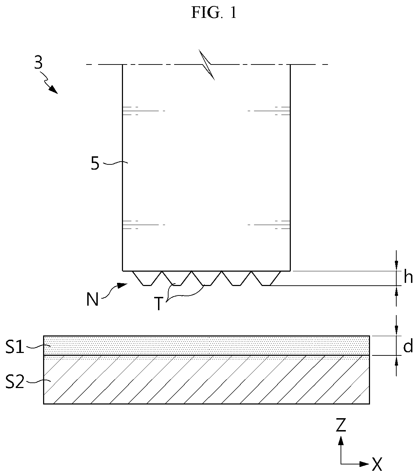

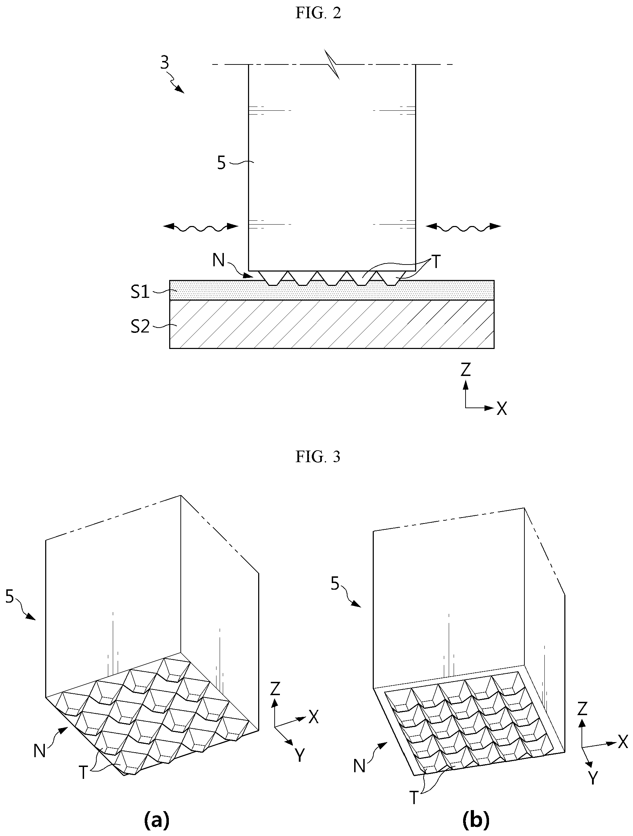

FIG. 1 is a diagram illustrating an ultrasonic welding device 3 and an object to be welded according to an embodiment of the present disclosure, and FIG. 2 is a diagram illustrating the ultrasonic welding process of an ultrasonic welding device 3 according to an embodiment of the present disclosure.

Referring to FIGS. 1 and 2, the ultrasonic welding device 3 according to the present disclosure includes a horn 5. The horn 5 may made an uneven shape on a first member S1. The horn 5 may press the first member S1 at a predetermined weight while being in contact therewith and also apply ultrasonic waves, thereby ultrasonically welding the first member S1 and a second member S2. That is, the horn 5 may press the first member S1 to ultrasonically weld the first member S1 and the second member S2. The horn 5 may include a knurled portion N having a plurality of protrusions T configured to protrude toward the first member S1. The plurality of protrusions T may press the first member S1 at a predetermined wight while being in contact therewith and apply ultrasonic waves, thereby performing ultrasonic welding of the first member S1 and the second member S2. However, the present disclosure is not limited to the example in which only the first member S1 and second member S2 are ultrasonically welded. That is, the ultrasonic welding device 3 according to the present disclosure may ultrasonically weld two or more members.

Referring to FIG. 2, in order to perform ultrasonic welding, the plurality of protrusions T must apply ultrasonic waves to the upper member S1 while pressing the upper member S1 of the object to be welded at a predetermined weight in contact therewith.

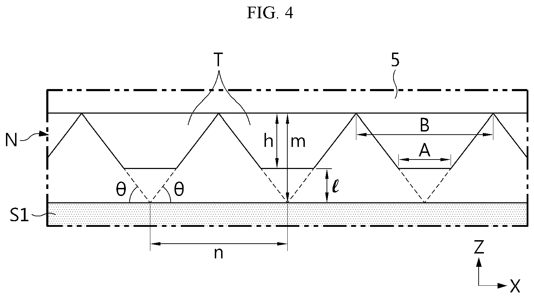

FIG. 3 is a diagram illustrating the horn 5 included in the ultrasonic welding device 3 according to an embodiment of the present disclosure. FIG. 4 is a diagram illustrating the ultrasonic welding device 3 and the first member S1 according to an embodiment of the present disclosure.

Referring to FIGS. 3 and 4, the plurality of protrusions T may be provided at regular intervals n. The plurality of protrusions T may be provided at regular intervals n along the X-axis and Y-axis between adj acent protrusions T. The plurality of protrusions T may have a square shape. For example, the plurality of protrusions T may be provided such that adjacent protrusions T are in point-contact with each other as shown in (a) of FIG. 3 or in line-contact with each other as shown in (b) of FIG. 3. In this case, the regular interval n may be the distance between the foremost ends of the adjacent protrusions T protruding in the -Z-axis direction.

Each of the plurality of protrusions T may be configured such that the cross-sectional area is gradually reduced toward the first member S1 (in the -Z-axis direction). For example, in the case where the width of the protrusion T at the end point of the protrusion T is a first width A and where the width of the protrusion T at a point where the protrusion T starts to protrude is a second width B, the first width A may be configured to be smaller than the second width B. In this case, the first width A and the second width B indicate the widths of cutting surface obtained by cutting the protrusion T along the plane that is perpendicular to the protruding direction of the protrusion T and including the end point of the protrusion T. That is, the protrusion T may be configured to have a trapezoidal cross-section.

In another aspect of the present disclosure, each of the plurality of protrusions T may have an inclination of a predetermined angle θ with respect to the first member S1. For example, in the case where each of the plurality of protrusions T is configured in a rectangular pyramid, the edge of the rectangular pyramid and the XY plane may form a predetermined angle θ therebetween. As an example, each of the plurality of protrusions T may be configured in a rectangular pyramid as shown in FIG. 4, and the angle between the edge of the rectangular pyramid and the XY plane may be about 30 degrees to about 60 degrees.

According to this structure of the present disclosure, the arrangement of the plurality of protrusions T may vary depending on the friction force required for ultrasonic welding. For example, if a large friction force is required, the plurality of protrusions T may be arranged such that the predetermined angle θ is increased and such that the regular interval n is reduced, thereby increasing the density of the plurality of protrusions T in the knurled portion N, and if a small friction force is required, the plurality of protrusions T may be arranged such that the predetermined angle θ is reduced and such that the regular interval n is increased, thereby lowering the density of the plurality of protrusions T in the knurled portion N.

In another aspect of the present disclosure, referring to FIGS. 3 and 4, the plurality of protrusions T may be configured to have a flat surface obtained by cutting, by a predetermined length l, the ends protruding toward the first member S1 along a plane parallel to the first member S1. Here, the predetermined length l may be the vertical distance in the -Z-axis direction from the flat surface formed by cutting the end to the foremost end before cutting.

Each of the plurality of protrusions T may be configured in a polygonal pyramid formed by cutting the end of the polygonal pyramid by a predetermined length along a plane parallel to the XY plane. For example, each of the plurality of protrusions T may be a rectangular pyramid. Alternatively, as another embodiment, each of the protrusions T may be a truncated cone formed by cutting the end of a cone by a predetermined length along a plane parallel to the XY plane. Reference to FIG. 4, the protrusion T may be configured in a shape obtained by cutting substantially a polygonal pyramid or cone structure with a height of m along a plane parallel to the first member S1. The cutting position may be spaced a length l apart from the vertex of substantially a polygonal pyramid or cone in a direction perpendicular to the first member S1. Therefore, the total height h of protrusion T may be m-l.

According to this structure of the present disclosure, when welding a thin upper member S1, it is possible to prevent the upper member S1 from being damaged or torn due to the plurality of sharp protrusions T. In addition, the contact area between the plurality of protrusions T and the upper member may be controlled by adjusting the predetermined length l to be cut according to the friction force required for ultrasonic welding.

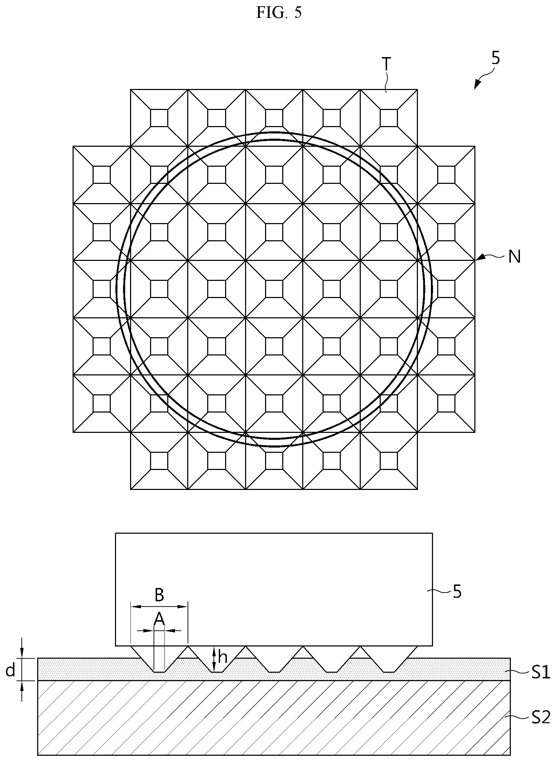

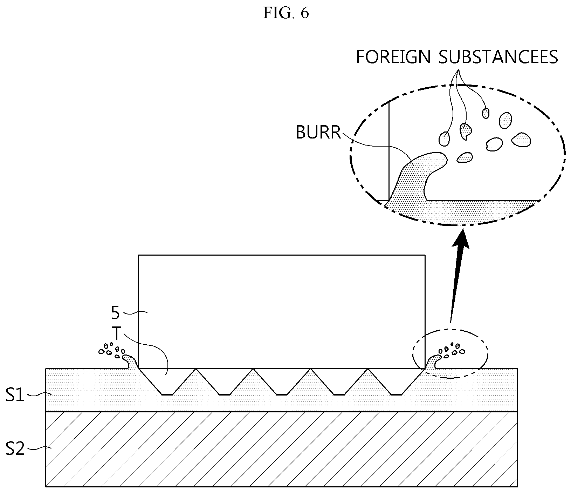

FIG. 5 is a diagram illustrating the structure of a conventional horn 5, and FIG. 6 is a diagram illustrating the process of ultrasonically welding the first member S1 and the second member S2 using the conventional horn 5.

Referring to FIG. 5, the conventional horn 5 may include a knurled portion N having a plurality of protrusions T configured to protrude toward the first member S1 in order to produce an uneven shape on the first member S1. Here, the shape of the protrusion T of the knurled portion N is constant regardless of its position. That is, the knurled pattern of the conventional horn 5 is configured as a constant shape, as shown in FIG. 5.

If ultrasonic welding is performed using the conventional horn 5, as shown in FIG. 6, plastic deformation occurs in the first member S1 at the outermost point of the knurled portion N due to the pressing force. This may result in burrs or foreign substances such as metal particles. Therefore, if the first member S1 and the second member S2 are components provided inside the battery, the foreign substances will remain inside the battery. Residual foreign substances is a potential risk factor, such as a short circuit, and is a major cause that greatly affects battery performance. Therefore, according to the conventional horn 5, burrs or foreign substances such as metal particles are very likely to be produced, so there is a potential risk such as a short circuit. That is, welding of the first member S1 and the second member S2 using the conventional horn 5 may have a significant influence on the deterioration of battery performance.

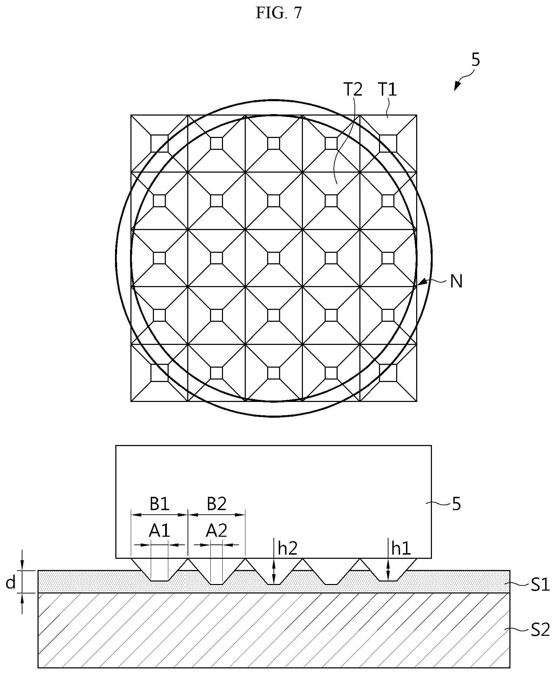

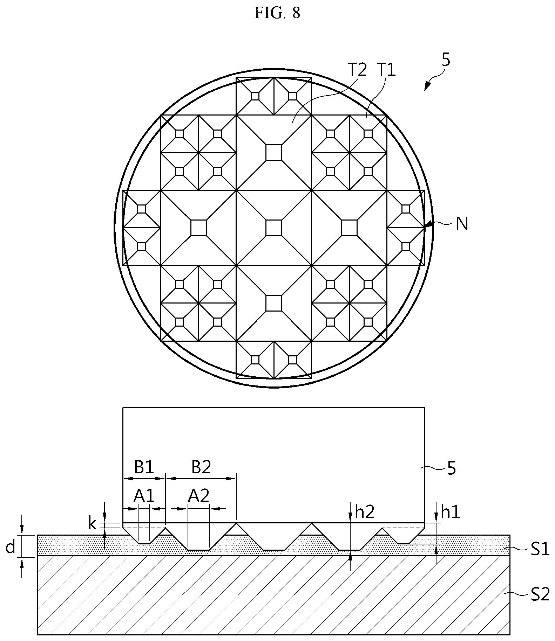

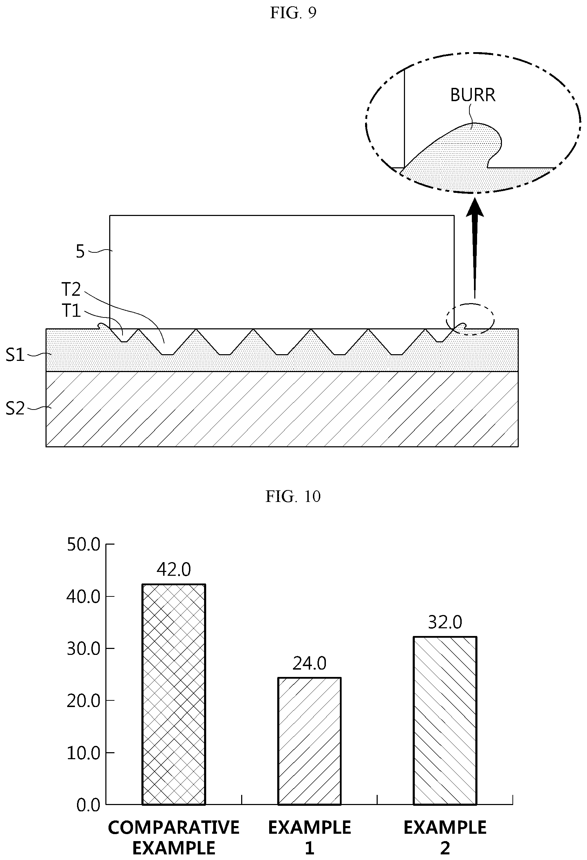

FIG. 7 is a diagram illustrating the structure of a horn 5 according to an embodiment of the present disclosure, and FIG. 8 is a diagram illustrating the structure of a horn 5 according to another embodiment of the present disclosure. FIG. 9 is a diagram illustrating the process of ultrasonically welding the first member S1 and the second member S2 using a horn 5 according to an embodiment of the present disclosure.

In one aspect of the present disclosure, the shape of a protrusion T1 located in the outermost area of the knurled portion N may be configured to be different from the shape of a protrusion T2 located in the inner area of the knurled portion N. For example, referring to FIG. 7, the first width A1 of the protrusion T1 located in the outermost area of the knurled portion N may be configured to be greater than the first width A2 of the protrusion T2 located in the inner area of the knurled portion N. Preferably, the first width A1 of the protrusion T1 located in the outermost area of the knurled portion N may be configured to be within a range of about 1.2 to 1.8 times the first width A2 of the protrusion T2 located in the inner area of the knurled portion N. More preferably, the first width A1 of the protrusion T1 located in the outermost area of the knurled portion N may be configured to be within a range of about 1.3 to 1.5 times the first width A2 of the protrusion T2 located in the inner area of the knurled portion N.

According to this structure, as shown in FIG. 9, it is possible to obtain the effect of preventing the production of burrs and foreign substances due to a reduction in plastic deformation by the pressing force in the outermost area of the knurled portion N during welding. Accordingly, if the first member S1 and the second member S2 are the elements provided inside the battery, it is possible to strengthen internal performance of the battery and secure stable battery performance by preventing foreign substances.

That is, the structure including a plurality of objects to be welded in which first members S1 and second members S2 are stacked may be configured such that the plurality of stacked objects is ultrasonically welded, such that a plurality of indentations is formed by ultrasonic welding on the outer surface of the plurality of stacked objects welded, and such that the width of the indentation in the outermost area, among the plurality of indentations, is greater than the width of the indentation in the inner area. In this structure, the production of burrs and foreign substances may be minimized.

As another embodiment of the present disclosure, referring to FIG. 8, the second width B1 of the protrusion T1 located in the outermost area of the knurled portion N may be less than or equal to the second width B2 of the protrusion T2 located in the inner area of the knurled portion N. Preferably, the second width B1 of the protrusion T1 located in the outermost area of the knurled portion N may be configured to be within a range of about 0.4 to 1.0 times the second width B2 of the protrusion T2 located in the inner area of the knurled portion N. More preferably, the second width B1 of the protrusion T1 located in the outermost area of the knurled portion N may be configured to be within a range of about 0.4 to 0.6 times the second width B2 of the protrusion T2 located in the inner area of the knurled portion N.

According to this structure, as shown in FIG. 9, it is possible to obtain the effect of preventing the production of burrs and foreign substances due to a reduction in plastic deformation by the pressing force in the outermost area of the knurled portion N during welding. Accordingly, if the first member S1 and the second member S2 are the elements provided inside the battery, it is possible to strengthen internal performance of the battery and secure stable battery performance by preventing foreign substances.

That is, the structure including a plurality of objects to be welded in which first members S1 and second members S2 are stacked may be configured such that the plurality of stacked objects is ultrasonically welded, such that a plurality of indentations is formed by ultrasonic welding on the outer surface of the plurality of stacked objects welded, and such that the depth of the indentation in the outermost area, among the plurality of indentations, is less than the depth of the indentation in the inner area. In this structure, the production of burrs and foreign substances may be minimized.

In another aspect of the present disclosure, referring to FIG. 8, the height h1 of the protrusion T1 located in the outermost area of the knurled portion N may be configured to be less than the height h2 of the protrusion T2 located in the inner area of the knurled portion N. According to this structure, as shown in FIG. 9, it is possible to obtain the effect of preventing the production of burrs and foreign substances due to a reduction in plastic deformation by the pressing force in the outermost area of the knurled portion N during welding.

In another aspect of the present disclosure, referring to FIGS. 7 and 8, the inclination angle of the protrusion T1 located in the outermost area of the knurled portion N may be configured to be the same as the inclination angle of the protrusion T2 located in the inner area of the knurled portion N.

For example, referring to FIG. 7, since the first width A1 of the protrusion T1 located in the outermost area of the knurled portion N is configured to be greater than the first width A2 of the protrusion T2 located in the inner area of the knurled portion N, and since the inclination angle of the protrusion T1 located in the outermost area of the knurled portion N is the same as the inclination angle of the protrusion T2 located in the inner area of the knurled portion N, the height h1 of the protrusion T1 located in the outermost area of the knurled portion N may be less than the height h2 of the protrusion T2 located in the inner area of the knurled portion N.

Meanwhile, referring to FIG. 8, since the second width B1 of the protrusion T1 located in the outermost area of the knurled portion N is less than or equal to the second width B2 of the protrusion T2 located in the inner area of the knurled portion N, and since the inclination angle of the protrusion T1 located in the outermost area of the knurled portion N is same as the inclination angle of the protrusion T2 located in the inner area of the knurled portion N, the height h1 of the protrusion T1 located in the outermost area of the knurled portion N may be less than the height h2 of the protrusion T2 located in the inner area of the knurled portion N.

According to this structure, as shown in FIG. 9, it is possible to obtain the effect of preventing the production of burrs and foreign substances due to a reduction in plastic deformation by the pressing force in the outermost area of the knurled portion N during welding.

In another aspect of the present disclosure, the location of the point where the cross-sectional area of the protrusion T1 located in the outermost area of the knurled portion N begins to decrease may be different from the location of the point where the cross-sectional area of the protrusion T2 located in the inner area of the knurled portion N begins to decrease.

For example, referring to FIG. 8, the point where the cross-sectional area of the protrusion T1 located in the outermost area of the knurled portion N begins to decrease may be located at the point at a distance k vertically away from the horn 5, whereas the point where the cross-sectional area of the protrusion T2 located in the inner area of the knurled portion N begins to decrease may be located on the surface of the horn 5. That is, the point where the cross-sectional area of the protrusion T1 located in the outermost area of the knurled portion N begins to decrease may be spaced a distance k apart from the point where the cross-sectional area of the protrusion T2 located in the inner area of the knurled portion N begins to decrease.

According to this structure, as shown in FIG. 9, it is possible to obtain the effect of preventing the production of burrs and foreign substances due to a reduction in plastic deformation by the pressing force in the outermost area of the knurled portion N during welding. Accordingly, if the first member S1 and the second member S2 are the elements provided inside the battery, it is possible to strengthen internal performance of the battery and secure stable battery performance by preventing foreign substances.

In order to prove the above effect, the inventor performed ultrasonic welding using the conventional horn 5 and the horn 5 of the present disclosure, and measured the total amount of foreign substances produced according thereto.

First, the conventional horn 5 shown in FIG. 5 corresponding to a comparative example is configured to include a knurled portion N including a protrusion T in a predetermined shape having a first width A of 0.14 mm and a second width B of 0.6 mm. Next, the horn 5 corresponding to Example 1 of the present disclosure shown in FIG. 7 is configured such that the first width A1 of the protrusion T1 located in the outermost area of the knurled portion N is 0.14 mm and such that the first width A2 of the protrusion T2 located in the inner area of the knurled portion N is 0.10 mm. The second widths B are set to 0.6 mm, regardless of the position of the protrusion T. Meanwhile, the horn 5 corresponding to Example 2 of the present disclosure shown in FIG. 8 is configured such that the second width B1 of the protrusion T1 located in the outermost area of the knurled portion N is 0.4 mm and such that the second width B2 of the protrusion T2 located in the inner area of the knurled portion N is 0.8 mm. The first widths A are set to 0.18 mm, regardless of the position of the protrusion T. In addition, ultrasonic welding was performed on the first member S1 and the second member S2 using the above horns 5 under the conditions of energy of 15 J, pressure of 3 bar, and amplitude of 50 %. The total amount of foreign substances produced as a result in each case is shown in FIG. 10.

FIG. 10 is a graph comparing the total amount of foreign substances generated as a result of ultrasonic welding using the conventional horn 5 with the total amount of foreign substances generated as a result of ultrasonic welding using the horn 5 according to the embodiment of the present disclosure.

Referring to FIG. 10, it can be seen that foreign substances were produced in a total of about 42 as a result of ultrasonic welding using the conventional horn 5. On the other hand, it can be seen that foreign substances were produced in a total of about 24 in Example 1 and in a total of about 32 in Example 2 as a result of ultrasonic welding using the horn 5 according to the embodiment of the present disclosure. That is, according to the embodiment of the present disclosure, it was confirmed that the total amount of foreign substances was reduced by about 57 to 76%, compared to the conventional ultrasonic welding device 3.

That is, as seen from the above experimental results, according to the present disclosure, it is possible to obtain the effect of preventing the production of burrs and foreign substances due to a reduction in plastic deformation by the pressing force in the outermost area of the knurled portion N during welding. Accordingly, if the first member S1 and the second member S2 are the elements provided inside the battery, it is possible to strengthen internal performance of the battery and secure stable battery performance by preventing foreign substances.

In one aspect of the present disclosure, the structure including the plurality of stacked objects to be welded may be a cylindrical battery. More specifically, the plurality of stacked objects to be welded may be terminals and collectors included in the cylindrical battery.

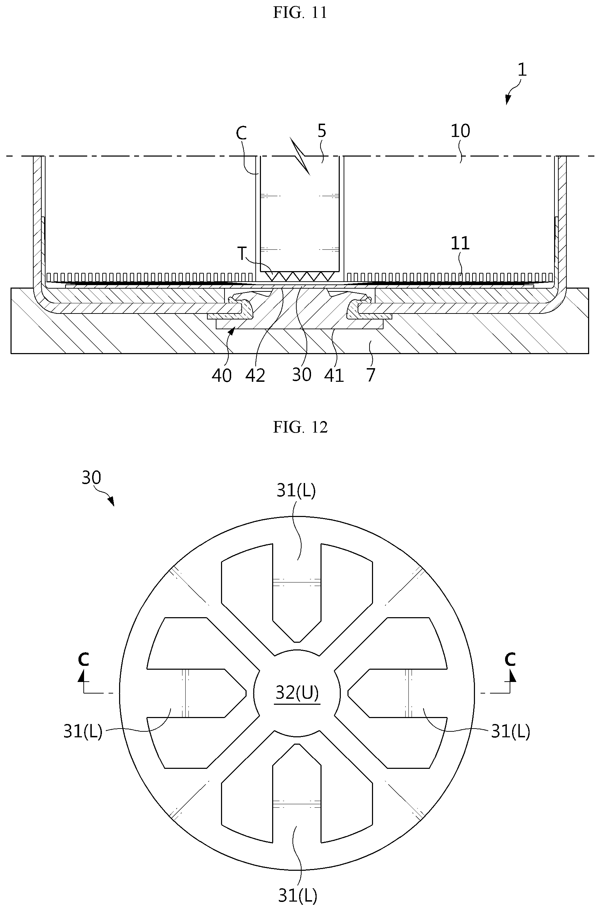

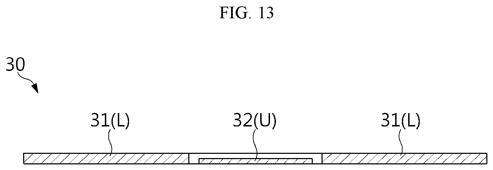

FIG. 11 is a diagram illustrating an ultrasonic welding system 1 according to an embodiment of the present disclosure. FIG. 12 is a diagram illustrating the first collector included in an ultrasonic welding system 1 according to an embodiment of the present disclosure. FIG. 13 is a schematically cross-sectional view taken along line C-C' in FIG. 12.

Referring to FIGS. 11 to 13, the ultrasonic welding system 1 according to the present disclosure may include an electrode assembly 10, a collector 30, a terminal 40, and an ultrasonic welding device 3.

The electrode assembly 10 may include a first electrode having a first polarity, a second electrode having a second polarity, and a separator interposed between the first electrode and the second electrode. The first electrode may be a negative electrode or positive electrode, and the second electrode may have a polarity opposite that of the first electrode. The electrode assembly 10 may be manufactured by winding a laminate formed by sequentially stacking a first electrode, a separator, a second electrode, and a separator at least once. That is, the electrode assembly 10 applied to the present disclosure may be a jelly roll-type electrode assembly 10.

This jelly roll-type electrode assembly 10 may have a central hole C formed approximately at its center and extending in the height direction (the direction parallel to the Z-axis).

The first electrode may include a first electrode plate and a first electrode active material layer formed by applying a first electrode active material on at least one surface of the first electrode plate. The second electrode may include a second electrode plate and a second active material layer formed by applying a second electrode active material on at least one surface of the second electrode plate. The first electrode may include a first non-coated portion 11 in which no positive electrode active material or negative electrode active material is coated on the electrode plate. The second electrode may include a second non-coated portion in which no positive electrode active material or negative electrode active material is coated on the electrode plate. At least a portion of the first non-coated portion 11 may function as a first electrode tab, and at least a portion of the second non-coated portion 11 may function as a second electrode tab.

Meanwhile, at least a portion of the first non-coated portion 11 may include a plurality of segments divided along the winding direction of the electrode assembly 10. In this case, the plurality of segments may be bent in the radial direction of the electrode assembly 10. The plurality of bent segments may overlap in multiple layers. In this case, the collector 30, which will be described later, may be coupled to an area where the plurality of segments overlap in multiple layers.

The collector 30 may be coupled to one side of the electrode assembly 10. The collector 30 may include a first coupling portion 31 coupled to the electrode assembly 10 and a second coupling portion 32 coupled to a terminal 40 to be described later.

The first coupling portion 31 may be disposed on one side of the electrode assembly 10. The first coupling portion 31 may be coupled to the first non-coated portion 11. The first coupling portion 31 may be coupled to the first non-coated portion 11 by laser welding. The first coupling portion 31 may have a laser welding portion L to be coupled to the first non-coated portion 11 by laser welding. A plurality of first coupling portions 31 may be provided.

The second coupling portion 32 may be coupled to the terminal 40. The second coupling portion 32 may be coupled to the terminal 40 by ultrasonic welding. The second coupling portion 32 may have an ultrasonic welding portion U coupled to the terminal 40. For example, the entire second coupling portion 32 may be the ultrasonic welding portion U, and approximately the center portion of the second coupling portion 32 may be the ultrasonic welding portion U.

At least a portion of the second coupling portion 32 may be formed to be thinner than the first coupling portion 31. This thickness reduction area, which is relatively thin, may include the ultrasonic welding portion U. The thickness of the thickness reduction area may be approximately 50% or more and less than 90% of the thickness of the first coupling portion 31.

The terminal 40 includes a terminal exposure portion 41 and a terminal insertion portion 42. The terminal exposure portion 41 is exposed to the outside of the battery housing. The terminal exposure portion 41 may be located approximately at the center of the closed portion of the housing 20. The terminal insertion portion 42 may be coupled to the second coupling portion 32 of the collector 30. The terminal insertion portion 42 may be coupled to the collector 30 by ultrasonic welding at a position corresponding to the central hole C of the electrode assembly 10.

The collector 30 and the terminal 40 may be welded by ultrasonic welding. Ultrasonic welding requires less expensive equipment and causes less thermal deformation than laser welding. In addition, laser welding may damage the separator of the electrode assembly due to the generated heat, whereas ultrasonic welding is advantageous because there is no such risk. In addition, in the welding process, laser welding requires the size of the central hole C to be above a specific size in order to secure the laser focus, but ultrasonic welding may be performed by inserting a horn 5 corresponding to the size of the central hole C.

The ultrasonic welding device 3 may ultrasonically weld the collector 30 and the terminal 40. That is, the collector may correspond to the first member S1, and the terminal may correspond to the second member S2. The ultrasonic welding device 3 may include a horn 5 that presses the collector 30. The ultrasonic welding device 3 may include an anvil 7 supporting the terminal 40. The ultrasonic welding device 3 may have a plurality of protrusions T protruding toward the collector 30 and each having a protruding length equal to or greater than the thickness of the collector 30. The thickness of the collector 30 may indicate the thickness of the portion of the collector 30 where ultrasonic welding is performed. That is, it may indicate the thickness of the ultrasonic welding portion U of the second coupling portion 32 of the collector 30. The horn 5 of the ultrasonic welding device 3 may be inserted into the central hole C of the electrode assembly 10 to perform welding between the collector 30 and the terminal 40.

Meanwhile, according to ultrasonic welding, the upper member and the lower member are welded by recrystallization by plastic flow. Therefore, if the second coupling portion 32 is too thick, plastic flow may not effectively occur. Therefore, as shown in FIG. 13, it is preferable that the second coupling portion 32 is configured to have a predetermined thickness or less.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

### [Description of Reference Numerals]

1 Ultrasonic welding system
3 Ultrasonic welding device
5 Horn
N Knurled portion
T Protrusion
7 Anvil
S1 First member
S2 Second member
10 Electrode assembly
11 First non-coated portion
C Central hole
30 Collector
31 First coupling portion
L Laser welding portion
32 Second coupling portion
U Ultrasonic welding portion
40 Terminal
41 Terminal exposure portion
42 Terminal insertion portion

## Claims

1. An ultrasonic welding device comprising:
a horn configured to press a first member to ultrasonically weld the first member and a second member,
wherein the horn comprises a knurled portion having a plurality of protrusions configured to protrude toward the first member to produce an uneven shape in the first member, and
wherein the shape of a protrusion located in an outermost area of the knurled portion is different from the shape of a protrusion located in an inner area of the knurled portion.

2. The ultrasonic welding device according to claim 1,
wherein the protrusion is configured such that the cross-sectional area thereof is gradually reduced toward the first member.

3. The ultrasonic welding device according to claim 1,
wherein a first width of the protrusion at an end point of the protrusion is less than a second width of the protrusion at a point from which the protrusion starts to protrude.

4. The ultrasonic welding device according to claim 3,
wherein the first width of the protrusion located in the outermost area of the knurled portion is greater than the first width of the protrusion located in the inner area of the knurled portion.

5. The ultrasonic welding device according to claim 3,
wherein the first width of the protrusion located in the outermost area of the knurled portion is 1.2 to 1.8 times the first width of the protrusion located in the inner area of the knurled portion.

6. The ultrasonic welding device according to claim 3,
wherein the second width of the protrusion located in the outermost area of the knurled portion is less than or equal to the second width of the protrusion located in the inner area of the knurled portion.

7. The ultrasonic welding device according to claim 3,
wherein the second width of the protrusion located in the outermost area of the knurled portion is 0.4 to 1.0 times the second width of the protrusion located in the inner area of the knurled portion.

8. The ultrasonic welding device according to claim 1,
wherein a height of the protrusion located in the outermost area of the knurled portion is less than a height of the protrusion located in the inner area of the knurled portion.

9. The ultrasonic welding device according to claim 1,
wherein the protrusion is configured to have a trapezoidal shape in its longitudinal cross-section.

10. A structure comprising a plurality of stacked objects to be welded,
wherein the plurality of stacked objects is ultrasonically welded,
wherein a plurality of indentations is formed on the outer surface of the plurality of stacked objects by ultrasonic welding, and
wherein a width of an indentation in an outermost area, among the plurality of indentations, is greater than a width of an indentation in an inner area.

11. A structure comprises a plurality of stacked objects to be welded,
wherein the plurality of stacked objects is ultrasonically welded,
wherein a plurality of indentations is formed on the outer surface of the plurality of stacked objects by ultrasonic welding, and
wherein a depth of an indentation in an outermost area, among the plurality of indentations, is less than a depth of an indentation in an inner area.

12. The structure according to claim 10 or 11,
wherein the structure comprising the plurality of stacked objects to be welded is a cylindrical battery.

13. The structure according to claim 12,
wherein the plurality of stacked objects to be welded are terminals and collectors included in the cylindrical battery.
